# EUROPEAN PATENT APPLICATION

(11) **EP 4 741 141 A1**
(43) Date of publication of application: **13.05.2026**
(21) Application number: 25215167.5
(22) Date of filing: 12.11.2025
(51) Int. Cl.: B29C 70/44

(54) **METHOD OF FORMING A COMPOSITE PREFORM**

(30) Priority: 12.11.2024 US 202463719216 P; 20.06.2025 US 202519244705
(71) Applicant: The Boeing Company, Arlington, VA 22202 (US)
(72) Inventor: SERENCSITS, William Louis, ARLINGTON, 22202 (US); PETERS, Brian Timothy, ARLINGTON, 22202 (US); DAVIS, Dawn, ARLINGTON, 22202 (US); LAI, Karlgren Ka-Tsun, ARLINGTON, 22202 (US); SCARFE, Manning James, ARLINGTON, 22202 (US)
(74) Representative: Plasseraud IP

(57) **Abstract**

A method of forming a composite preform includes transforming a composite blank material into the composite preform via a two-stage process. The composite blank material is disposed between first and second membranes during a first stage. The first membrane and the second membrane are disposed across first and second mold bodies in the first stage. A vacuum is activated to expel a gaseous fluid out of a space between the first membrane and the first mold body and the second mold body to form a first radius of the composite blank material during the first stage. A third membrane is disposed at least partially over the composite blank material during a second stage. The vacuum is activated to expel a gaseous fluid out of an area between the third membrane and the first mold body to form a second radius of the composite blank material during the second stage.

## Description

### CROSS-REFERENCE

This Patent Application claims priority to U.S. Provisional Patent Application No. 63/719216, filed on November 12, 2024, and entitled "METHOD OF FORMING A COMPOSITE PREFORM."

### BACKGROUND

Current forming processes for composite materials may utilize deformable membranes and a vacuum to form a full stack of material at once. To form complex configurations using composite materials, some composite materials have small segments of fiber material that are hand laid such that the fiber direction does not deviate from a set standard amount. This process may be time consuming. Furthermore, due to the complex geometry to be achieved during the forming process, the deformable membranes may not be able to elongate to the required length.

### SUMMARY

Therefore, it is desirable to develop a method that improves manufacturing processes of forming a composite preform, and other benefits are discussed herein.

The present disclosure provides a method of forming a composite preform according to the appended independent claim 1.

The detailed description and the drawings or FIGS. are supportive and descriptive of the disclosure, but the claim scope of the disclosure is defined solely by the claims. While some of the best modes and other configurations for carrying out the claims have been described in detail, various alternative designs and configurations exist for practicing the disclosure defined in the appended claims.

### BRIEF DESCRIPTION OF THE DRAWINGS

FIG. 1 is a schematic perspective view of tooling including a mold having a first mold body and a second mold body attached to each other.
FIG. 2 is a schematic perspective view of the first mold body and the second mold body separated from each other.
FIG. 3 is a schematic illustration of a composite blank material disposed inside of a first membrane and a second membrane during a first stage of the forming process.
FIG. 4 is a schematic perspective view of the first mold body illustrating a heater in a different pattern.
FIG. 5 is a schematic perspective view of a third membrane positioned relative to the first mold body for a second stage.
FIG. 6 is a schematic perspective view of the third membrane positioned relative to the first mold body from an opposite side as compared to FIG. 5.
FIG. 7 is a schematic perspective view of an edge of the third membrane folded over a secondary forming body of the first mold body for the second stage.
FIG. 8 is a schematic perspective view of an edge of the third membrane folded over a secondary forming body of the first mold body for another configuration for the second stage.
FIG. 9 is a schematic perspective view of the first mold body having the secondary forming body in a different orientation as compared to FIGS. 5-8.
FIG. 10 is a schematic cross-sectional view of the second stage before activating a vacuum.
FIG. 11 is a schematic cross-sectional view of the second stage after activating the vacuum.

The present disclosure may be extended to modifications and alternative forms, with representative configurations shown by way of example in the drawings and described in detail below. Inventive aspects of the disclosure are not limited to the disclosed configurations. Rather, the present disclosure is intended to cover modifications, equivalents, combinations, and alternatives falling within the scope of the disclosure as defined by the appended claims.

### DETAILED DESCRIPTION

Those having ordinary skill in the art will recognize that all directional references (e.g., above, below, upward, up, downward, down, top, bottom, left, right, vertical, horizontal, etc.) are used descriptively for the FIGS. to aid the reader's understanding, and do not represent limitations (for example, to the position, orientation, or use, etc.) on the scope of the disclosure, as defined by the appended claims. Moreover, terms such as "first," "second," "third," and so on, may be used to describe separate components. Such terminology may include the words specifically mentioned above, derivatives thereof, and words of similar import. Furthermore, the term "substantially" can refer to a slight imprecision or slight variance of a condition, quantity, value, or dimension, etc., some of which are within manufacturing variance or tolerance ranges.

As used herein, an element or step recited in the singular and preceded by the word "a" or "an" should be understood as not necessarily excluding the plural of the elements or steps. That is, "a", "an", "the", "at least one", and "one or more" are used interchangeably to indicate that at least one of the items is present and more than one may be present, unless stated otherwise. Further, any reference to "one configuration" is not intended to be interpreted as excluding the existence of additional configurations that also incorporate the recited features. Moreover, unless explicitly stated to the contrary, configurations "comprising" or "having" an element or a plurality of elements having a particular property may include additional elements not having that property. The phrase "at least one of" as used herein should be construed to include the non-exclusive logical "or", i.e., A and/or B and so on depending on the number of components.

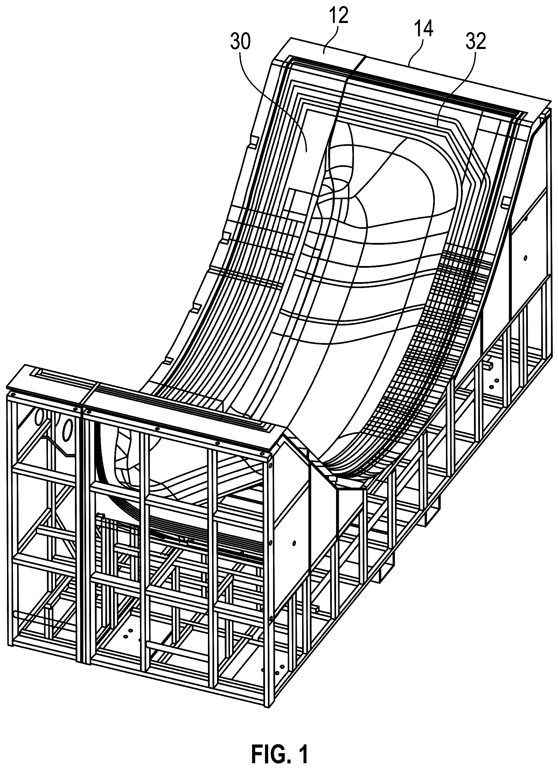

Referring to the figures, wherein like numerals indicate like or corresponding parts throughout the several views, tooling for forming a composite preform 10 is generally shown in FIG. 1. The tooling described herein is implemented to form complex composite preforms 10 which require significant membrane elongation.

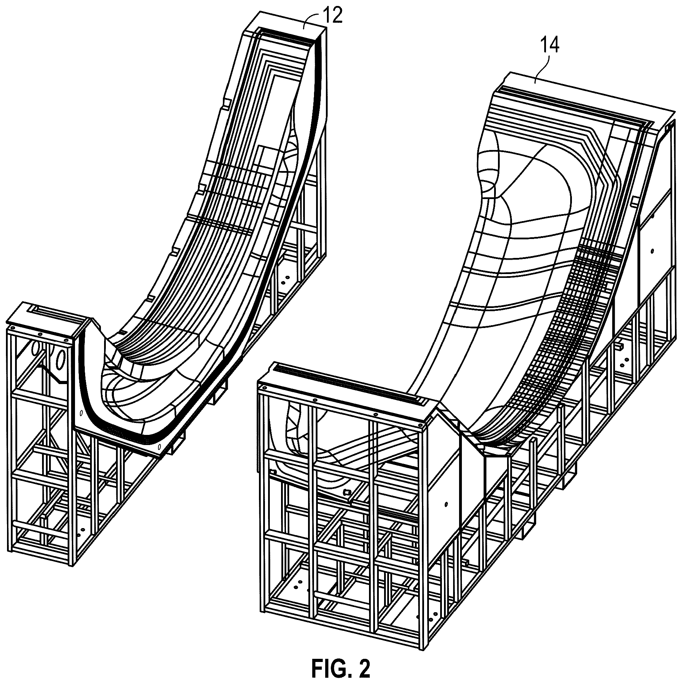

Referring to FIGS. 1 and 2, the tooling includes a mold 12, 14 presenting features to form various profiles of the composite preform 10. The mold 12, 14 may include a first mold body 12 and a second mold body 14. Generally, the process to form the composite preform 10 occurs in two stages. In one of the stages, the first mold body 12 and the second mold body 14 are connected together (see FIG. 1). In the other one of the stages, only the first mold body 12 is implemented. The tooling may be referred to as a split tool, and the two-stage process will be discussed further below.

The present disclosure pertains to a method of forming the composite preform 10. The composite preform 10 is formed utilizing the two-stage process as mentioned above. That is, a composite blank material 16 is transformed into the composite preform 10 via the two-stage process, i.e., a first stage and a second stage. The method improves manufacturing processes of forming the composite preform 10. For example, the method described herein allows significant membrane elongation to allow the formation of complex composite preforms 10.

Depending on the desired final configuration of the formed composite preform 10, the mold 12, 14 may be configured with one or more contour profiles 18, 20 in which the composite blank material 16 is molded to in order to form corresponding contour profiles of the final composite preform 10. For example, the contour profiles of the mold 12, 14 are implemented to form complex composite preforms 10. Non-limiting examples of complex composite preforms 10 are C-shaped channels, Z-shaped channels, J-shaped channels, U-shaped channels, I-shaped channels, any suitable curved-shaped channels, or any other suitable shapes, etc.

The composite preform 10 may be any suitable configuration depending on the application. For example, the composite preform 10 may be configured as parts of an aircraft, a vehicle, a locomotive, a watercraft, a robot, farm equipment, or any other parts of a movable platform, whether autonomous or non-autonomous. As one example, if the composite preform 10 is for an aircraft application, the composite preform 10 may be for stringers, fuselage skins, stabilizers, wings, frames, spars, door components, etc. As other examples, the composite preform 10 may be configured as parts of a stationary platform, and non-limiting examples of a stationary platform may include farm equipment, buildings, generators, power grid equipment, or any other stationary platform.

Generally, the composite blank material 16/the composite preform 10 may include reinforced fibers. For example, the reinforced fibers may be a dry fiber material. The reinforced fibers may include carbon, glass, or any other suitable dry fiber. The dry fibers may be infused into a resin to form the composite blank material 16/the composite preform 10. Alternatively, the composite blank material 16/the composite preform 10 may include pre-impregnated fibers in a polymer resin, i.e., a prepreg.

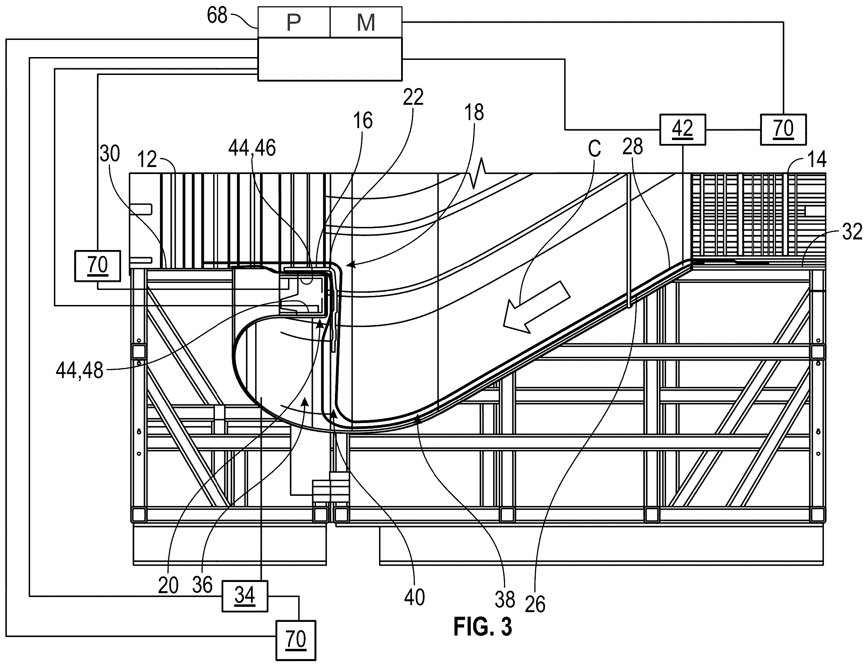

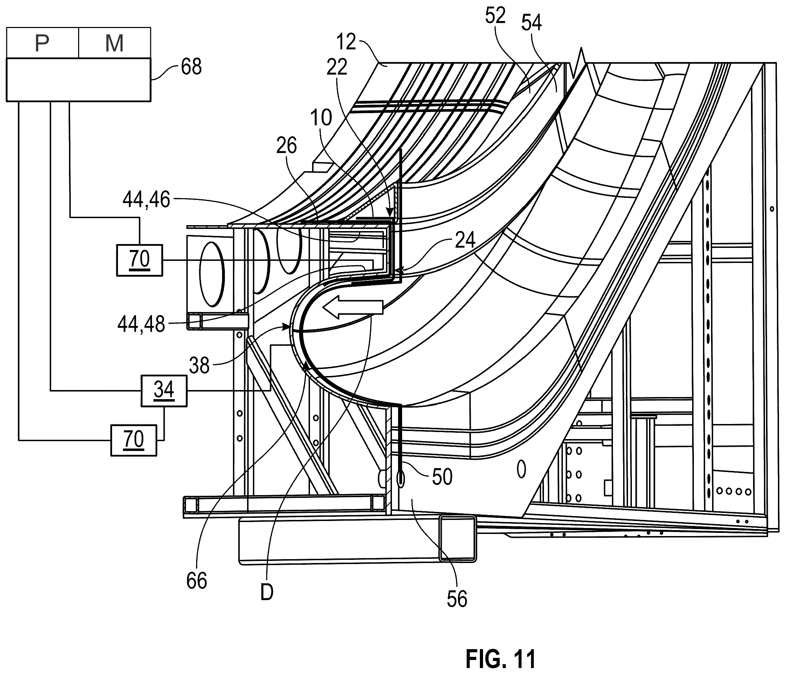

For example, the first mold body 12 may include a first contour profile 18 to form a first radius 22 (see FIG. 3) of the composite preform 10 and, optionally, may include a second contour profile 20 to form a second radius 24 (see FIG. 11) of the composite preform 10. In certain configurations, the first contour profile 18 and the second contour profile 20 are spaced from each other. However, it is to be appreciated that the first contour profile 18, the second contour profile 20, and any other contour profile may be any suitable location along the mold 12, 14 to correspondingly form the desired radius along the composite preform 10.

Starting with the first stage, the first mold body 12 and the second mold body 14 are connected together for the first stage (see FIG. 1). That is, the first mold body 12 and the second mold body 14 are implemented during the first stage. The first mold body 12 and the second mold body 14 are connected together to provide an air-tight connection, and one or more seals may be disposed between the first mold body 12 and the second mold body 14 to provide the air-tight connection. In this stage, the first mold body 12 and the second mold body 14 cooperate to transform the composite blank material 16 into the composite preform 10 having the first radius 22. Therefore, during the first stage, the first radius 22 is formed.

Turning to FIG. 3, the composite blank material 16 is bagged in the first stage. That is, the composite blank material 16 is disposed between a first membrane 26 and a second membrane 28 during the first stage. The first membrane 26 and the second membrane 28 are disposed across the first mold body 12 and the second mold body 14 in the first stage. More specifically, the first mold body 12 may include a first sealing surface 30 and the second mold body 14 may include a second sealing surface 32. The first contour profile 18 is disposed between the first sealing surface 30 and the second sealing surface 32. Therefore, the first membrane 26 is disposed across the first sealing surface 30 and the second sealing surface 32 such that the first membrane 26 overlaps the first contour profile 18.

The first membrane 26 and the second membrane 28 may be formed of a flexible or deformable material to allow the membranes 26, 28 to lay over various surfaces and allow elongation. Therefore, the membranes 26, 28 may be formed as a sheet, a film, a membrane, etc. The flexible or deformable material of the membranes 26, 28 may include one or more of nylons, urethanes, thermoplastic elastomers, co-polymers, polytetrafluoroethylene (PTFE), etc.

Continuing with FIG. 3, the composite blank material 16 is disposed on the first membrane 26. The second membrane 28 is disposed over the composite blank material 16 and abuts the first membrane 26 beyond the composite blank material 16 to contain the composite blank material 16 therebetween. Generally, the first membrane 26 and the second membrane 28 bag the composite blank material 16.

Referring to FIG. 3, the bag is vacuumed to compact the composite blank material 16 while maintaining the integrity of the first membrane 26 and the second membrane 28. To do so, a vacuum 34 is activated to expel a gaseous fluid out of a space 36 between the first membrane 26 and the first mold body 12 and the second mold body 14 to cause the composite blank material 16 to form the first radius 22 during the first stage. Activating the vacuum 34 removes the gaseous fluid from the space 36 which causes the first membrane 26 and the second membrane 28 to elongate along an outer surface 38 of the first mold body 12 and the second mold body 14 in the direction of arrow C. In other words, a compaction pressure, induced via the vacuum 34, is applied to the membranes 26, 28 which causes the membranes 26, 28 to elongate a desired amount without reaching the limits of the membranes 26, 28 during this process.

In addition, a gaseous fluid is expelled out of another area 40 between the first membrane 26 and the second membrane 28. That is, the another area 40 houses the composite blank material 16, i.e., is the area 40 inside of the bag. As such, a vacuum 42 may be activated to expel the gaseous fluid out of the another area 40 between the first membrane 26 and the second membrane 28. The vacuum 42 activated for the another area 40 is a different vacuum 42 from the vacuum 34 activated for the space 36.

As the first membrane 26 and the second membrane 28 elongate, the membranes 26, 28 stick together, and thus, elongate together. The first membrane 26 and the second membrane 28 continue to elongate until a predetermined elongation is reached. The predetermined elongation is prior to reaching the limits of the membranes 26, 28, such as prior to tearing or ripping either of the membranes 26, 28. The predetermined elongation may be a maximum elongation of the membranes 26, 28 (prior to reaching the limit). Expelling the gaseous fluid out of the space 36 continues until the predetermined elongation of the second membrane 28 is reached, at which time expelling the gaseous fluid is stopped via the vacuum 34, and then, the vacuum 34 holds a predetermined vacuum level to the first membrane 26 and the second membrane 28 to form the first radius 22 over the first contour profile 18. The predetermined vacuum level provides the desired compaction pressure on the composite blank material 16 to form the first radius 22. Maintaining a constant predetermined vacuum level ensures that the profile being formed, i.e., the first radius 22, does not change from the desired configuration.

The predetermined vacuum level is held during a heating process which forms/sets the first radius 22 along the first contour profile 18. That is, compaction continues along the first contour profile 18 during the heating process. The predetermined vacuum level is set prior to the heating process.

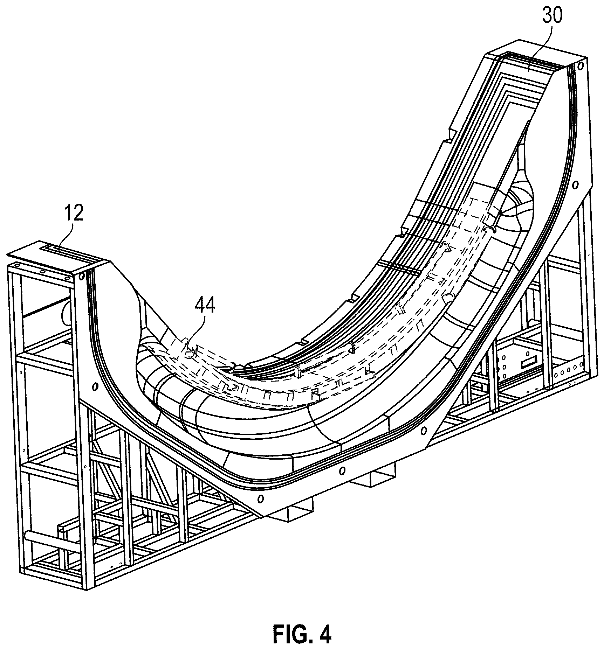

Referring to FIGS. 3 and 4, a heater 44 may be incorporated into the mold 12, 14, and in certain configurations, incorporated into the first mold body 12. FIG.4 illustrates a section of the first mold body 12 in a different pattern to provide an example location of the heater 44 embedded inside of the mold 12, 14.

The heater 44 heats at least part of the composite blank material 16 around the first radius 22 to a predetermined temperature while the predetermined vacuum level is held to set a profile of the first radius 22 during the first stage. More specifically, the heater 44 heats the first radius 22 to the predetermined temperature while the predetermined vacuum level is held on the first membrane 26 and the second membrane 28 to set a profile of the first radius 22 during the first stage to partially form the composite preform 10.

The heater 44 may have a plurality of zones 46, 48, and for the below illustrative purposes for the below discussion, a first zone 46 and a second zone 48, in which the zones 46, 48 may be activated individually, separately, in a pattern, randomly, or simultaneously. By having zoned heating, a certain spot or area of the composite blank material 16 is heated to set the profile of the composite preform 10 at that spot or area. As such, other locations away from the heated locations are not set in a final profile of the composite preform 10 at the first stage which allows for additional profiles 18, 20 to be formed in the composite blank material 16. The first zone 46 and the second zone 48 may be different from each other, such as spaced from each other, disposed adjacent to each other, disposed next to each other, partially overlap each other, or disposed in any other suitable location along the first mold body 12.

Generally, the first zone 46 of the heater 44 is activated to heat the composite blank material 16 to set the profile of the first radius 22 during the first stage. In certain configurations, one single zone 46 is activated in the first stage. For example, in certain configurations, the one single zone 46 activated in the first stage may be the first zone 46, which heats the composite blank material 16 along the area that forms the first radius 22. In other configurations, a plurality of zones 46 may be activated in the first stage to heat the composite blank material 16 along the area that forms the first radius 22. Generally, the vacuum 34 pressure from the predetermined vacuum level remains constant when heating during the first stage.

Once the heating process is completed for the first zone 46, the composite blank material 16/the composite preform 10 is cooled. During the cooling process, the predetermined vacuum level remains held. Cooling the first radius 22 occurs after heating the first radius 22 to the predetermined temperature to partially form the composite preform 10. The temperature of the heater 44 may be reduced and/or the heater 44 may be turned off to cool the first radius 22.

The predetermined vacuum level is released after cooling the first radius 22. That is, the vacuum 34 is deactivated to stop expelling the gaseous fluid from the space 36 after the first radius 22 is cooled. Next, the second membrane 28 is removed at the end of the first stage. More specifically, the second membrane 28 is removed after releasing the predetermined vacuum level at the end of the first stage. The second membrane 28 is discarded.

Once the second membrane 28 is removed, the first membrane 26 may be accessible. In certain configurations, the first membrane 26 is trimmed after removing the second membrane 28. Optionally, the first membrane 26 is trimmed to prepare for the second stage. The partially formed composite preform 10 remains on the first membrane 26 and the first mold body 12 when being trimmed.

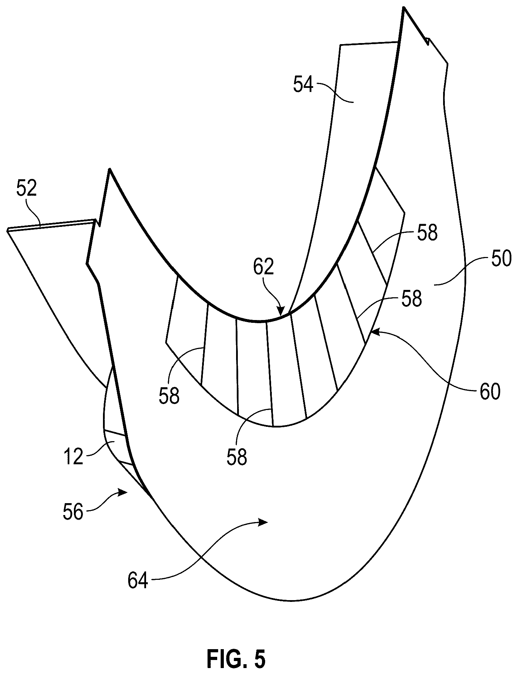

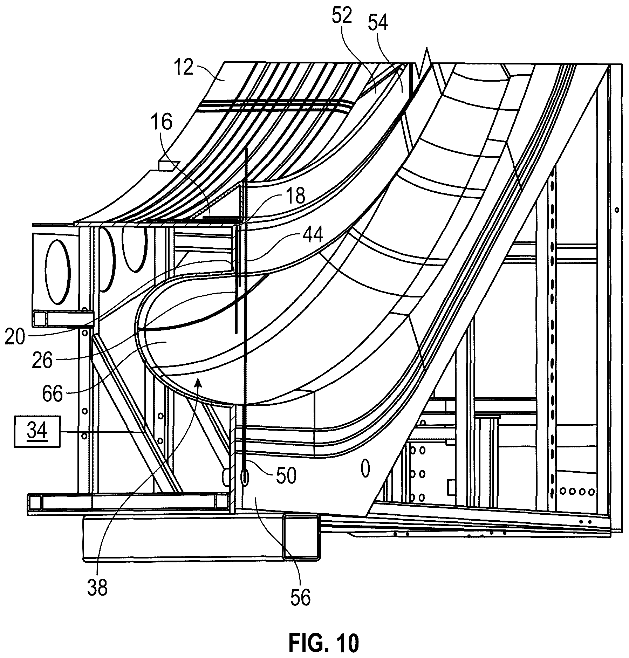

Next, the first mold body 12 and the second mold body 14 are disconnected from each other for the second stage (see FIG. 2). The first mold body 12 and the second mold body 14 are disconnected from each other while maintaining the partially formed composite preform 10 on the first mold body 12. For the second stage of the forming process, the second mold body 14 is not used. In other words, the first mold body 12 is implemented for the second stage, not the second mold body 14. As such, the second mold body 14 is removed from the first mold body 12 for the second stage such that the first mold body 12 is implemented during the second stage without the second mold body 14. As mentioned above, the second stage occurs after the first stage. For illustrative purposes, FIGS. 5-11 illustrate various configurations of the process of the second stage.

For the second stage, the first mold body 12 transforms the composite blank material 16 into the composite preform 10 having the second radius 24 (the second radius 24 is shown in FIG. 11). A third membrane 50 is disposed at least partially over the composite blank material 16 during the second stage. In certain configurations, the third membrane 50 may be completely over the composite blank material 16.

The third membrane 50 may be formed of a flexible or deformable material to allow the membrane 50 to lay over various surfaces and allow elongation. Therefore, the third membrane 50 may be formed as a sheet, a film, a membrane, etc.

The third membrane 50 may cooperate with the first mold body 12 in various arrangements, and various examples are discussed below. In each of these configurations, the first mold body 12 includes a secondary forming body 52 (see FIGS. 5-11), which may be disposed in different orientations depending on the configuration. The secondary forming body 52 of the first mold body 12 may present a secondary sealing surface 54, which cooperates with the third membrane 50 to seal another bag for the second stage. Generally, the secondary sealing surface 54 forms a flat surface in which the third membrane 50 lays across. As such, the secondary forming body 52 may include a flange having the secondary sealing surface 54.

The secondary forming body 52 may be incorporated into the first mold body 12 or may be a separate piece that is attached to the first mold body 12 after the first stage is completed. For the configurations of FIGS. 5-11, the secondary forming body 52 may be a separate piece attached to the first mold body 12 after the first stage.

Regardless of how the secondary forming body 52 attaches to the first mold body 12, the first mold body 12 may include a third sealing surface 56 spaced from the secondary sealing surface 54. Generally, the third membrane 50 extends across the first mold body 12 from the secondary sealing surface 54 to the third sealing surface 56. For illustrative purposes, FIGS. 5-8, 10, and 11 illustrate the third membrane 50 disposed across the secondary sealing surface 54 and the third sealing surface 56.

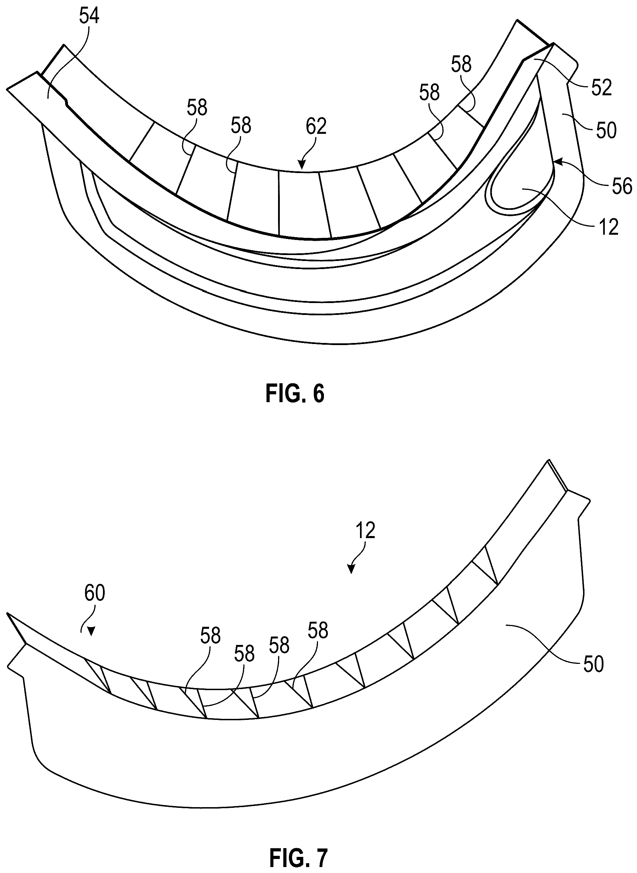

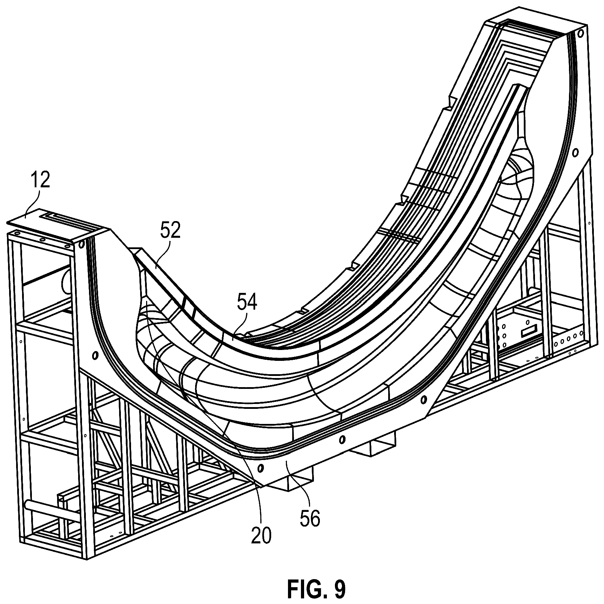

Turning to FIGS. 5 and 6, the third membrane 50 is cut into slits 58 to define a foldable portion 60 of the third membrane 50. The slits 58 are cut into one edge 62 of the third membrane 50 such that a center portion 64 of the third membrane 50 remains whole or slit free. Once the third membrane 50 is positioned relative to the first mold body 12, the foldable portion 60 is folded over the secondary forming body 52 of the first mold body 12 (see FIG. 7). The slits 58 allow the third membrane 50 to lay flat on the secondary forming body 52. Next, the foldable portion 60 is attached to the secondary forming body 52 such that the foldable portion 60 is sealed to the secondary forming body 52 via the secondary sealing surface 54, and thus prevents gaseous fluid leaks therebetween. The foldable portion 60 of the third membrane 50 may be attached to the secondary forming body 52 by adhesive, tape, sealant, or any other suitable components to seal the third membrane 50 to the secondary forming body 52. In FIGS. 5-8, the secondary forming body 52 is disposed in a first orientation. In FIGS. 9-11, the secondary forming body 52 is disposed in a second orientation different from the first orientation.

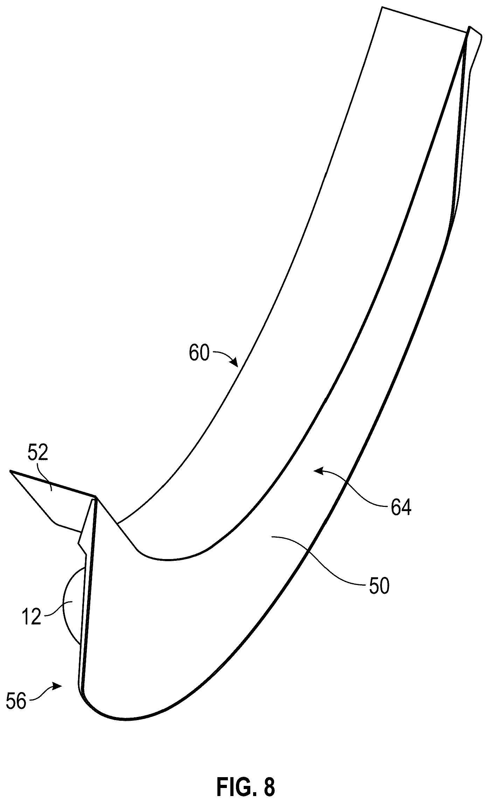

Regarding FIG. 7, the third membrane 50 includes the slits 58, the foldable portion 60, and is folded the same as discussed above for FIGS. 5 and 6. Regarding FIG. 8, a first part of the third membrane 50 is disposed over part of the first mold body 12 and trimmed just above or adjacent to the partially formed composite preform 10, and then a second part of the third membrane 50 is disposed over part of the first mold body 12 which abuts and mates with the first part of the third membrane 50 along the first radius 22 of the partially formed composite preform 10. Generally, the first part and the second part of the third membrane 50 are separate pieces, and thus, the first part and the second part are joined along a seam via tape, sealant, adhesive, or any other suitable components to seal the first part and the second part of the third membrane 50 together, to prevent gaseous fluid leaks therebetween.

Referring to FIGS. 9-11, the secondary forming body 52 is disposed in a different orientation as compared to FIGS. 5-8. In the arrangement of FIGS. 9-11, the secondary forming body 52 is attached to the first mold body 12. That is, the secondary sealing surface 54 is attached to the first mold body 12, and, as mentioned above, the secondary sealing surface 54 presents the flat configuration. The third membrane 50 is disposed across the secondary sealing surface 54 of the first mold body 12 and partially over the composite blank material 16 and partially over the trimmed first membrane 26 to contain the composite blank material 16. More specifically, the third membrane 50 may be disposed across the secondary sealing surface 54 and the third sealing surface 56 of the first mold body 12 and partially over the composite blank material 16 such that the third membrane 50 overlaps the second contour profile 20 to contain the composite blank material 16. As mentioned above, the first membrane 26 that is trimmed does not operate to bag the composite blank material 16 for the vacuuming process for the second stage.

Once the third membrane 50 is attached to the first mold body 12, the vacuum 34 is activated to expel a gaseous fluid out of an area 66 between the third membrane 50 and the first mold body 12 to cause the composite blank material 16 to form the second radius 24 during the second stage. The first membrane 26 that is trimmed does not operate to bag the composite blank material 16 for the vacuuming process for the second stage.

Activating the vacuum 34 removes the gaseous fluid from the area 66 which causes the third membrane 50 to elongate along the outer surface 38 of the first mold body 12 in the direction of arrow D. In other words, a compaction pressure, induced via the vacuum 34, is applied to the third membrane 50 which causes the third membrane 50 to elongate a desired amount without reaching the limits of the third membrane 50 during this process.

The third membrane 50 continues to elongate until a predetermined elongation is reached. The predetermined elongation is prior to reaching the limits of the third membrane 50, such as prior to tearing or ripping the third membrane 50. The predetermined elongation may be referred to as a maximum elongation of the third membrane 50. Expelling the gaseous fluid out of the area 66 continues until the predetermined elongation of the third membrane 50 is reached, at which time expelling the gaseous fluid is stopped via the vacuum 34, and then, the vacuum 34 holds a predetermined vacuum level to the third membrane 50 to form the second radius 24 over the second contour profile 20. The predetermined vacuum level provides the desired compaction pressure on the composite blank material 16 to form the second radius 24. Maintaining a constant predetermined vacuum level ensures that the profile being formed, i.e., the second radius 24, does not change from the desired configuration.

Regardless of the way that the third membrane 50 cooperates with the first mold body 12, heating occurs after the predetermined vacuum level is held. The predetermined vacuum level is held during a heating process which forms/sets the second radius 24 along the second contour profile 20. That is, compaction continues along the second contour profile 20 during this heating process. The predetermined vacuum level is set prior to the heating process.

The heater 44 heats at least part of the composite blank material 16 around the second radius 24 to a predetermined temperature while the predetermined vacuum level is held on the third membrane 50 to set a profile of the second radius 24 during the second stage. For example, the second zone 48 of the heater 44 is activated to heat the composite blank material 16 to set a profile of the second radius 24 during the second stage. In certain configurations, one single zone 48 is activated in the second stage. For example, in certain configurations, the one single zone 48 activated in the second stage may be the second zone 48, which heats the composite blank material 16 along the area that forms the second radius 24. In other configurations, a plurality of zones 48 may be activated in the second stage to heat the composite blank material 16 along the area that forms the second radius 24. Generally, the vacuum 34 pressure from the predetermined vacuum level remains constant when heating during the second stage.

Optionally, the heater 44 may heat at least part of the composite blank material 16 around the first radius 22 and the second radius 24 to a predetermined temperature while the predetermined vacuum level is held on the third membrane 50 to set the composite preform 10. That is, both of the zones 46, 48 or any number of the zones may be activated during the second stage. For example, the first zone 46 of the heater 44 may be activated and the second zone 48 of the heater 44 may be activated during the second stage. When both zones 46, 48 are activated, the heater 44 may heat the entire composite preform 10 which uniformly heat, and thus, cure the entire composite preform 10. Optionally, another heater, such as a bag-side heating device, may be disposed over the entire composite preform 10 to further assist with curing/setting up the profile of the entire composite preform 10.

Once the heating process is complete for the second zone 48, and the first zone 46 (if this zone 46 was activated), the completed composite preform 10 is cooled. For example, the first radius 22 and the second radius 24, or the entire completed composite preform 10, is cooled after heating to the predetermined temperature to complete the forming of the composite preform 10. During the cooling process, the predetermined vacuum level is held. Cooling the second radius 24 occurs after heating the second radius 24 to the predetermined temperature to complete the forming of the composite preform 10. The temperature of the heater 44 may be reduced and/or the heater 44 may be turned off to cool the second radius 24.

The predetermined vacuum level is released after cooling the first radius 22 and the second radius 24. That is, the predetermined vacuum level is released, which stops compaction of the completed composite preform 10 after cooling of the completed composite preform 10. That is, the vacuum 34 deactivates to stop expelling the gaseous fluid from the area 66 after the first radius 22 and the second radius 24 are cooled. Next, the third membrane 50 is removed at the end of the second stage. More specifically, the third membrane 50 is removed after releasing the predetermined vacuum level at the end of the second stage. Then, the completed composite preform 10, with the first radius 22 and the second radius 24 of the complex geometry, is removed from the first mold body 12.

A controller 68 (see FIGS. 3 and 11) is in communication with each of the heaters 44, if more than one is being implemented, and each of the vacuums 34, 42 if more than one vacuum is being implemented, to control heat, cooling, and compaction pressure. For example, one or more sensors 70 may be coupled to the heater 44, the vacuum 34, 42, the mold 12, 14, etc., to monitor temperature, compaction pressure, etc. It is to be appreciated that the controller 68 is omitted in some of the figures, but the controller 68 would be in communication with the various components in those figures as well to control the heaters 44 and the vacuums 34, 42, as described herein.

The controller 68 is configured to execute the instructions from memory M, via a processor P. For example, the controller 68 may be a host machine or distributed system, e.g., a computer such as a digital computer or microcomputer, and, as the memory M, tangible, non-transitory computer-readable memory such as read-only memory (ROM) or flash memory. The controller 68 may also have random access memory (RAM), electrically erasable programmable read-only memory (EEPROM), a high-speed clock, analog-to-digital (A/D) and/or digital-to-analog (D/A) circuitry, and any required input/output circuitry and associated devices, as well as any required signal conditioning and/or signal buffering circuitry. Therefore, the controller 68 may include all software, hardware, memory M, algorithms, connections, sensors 70, etc., necessary to control, for example, the heaters 44 and the vacuums 34, 42. As such, a control method operative to control the heaters 44 and the vacuums 34, 42, may be embodied as software or firmware associated with the controller 68. It is to be appreciated that the controller 68 may also include any device capable of analyzing data from various sensors 70, devices, comparing data, making the necessary decisions required to control and/or monitor the heaters 44 and the vacuums 34, 42. Optionally, more than one controller 68 may be implemented, and if a plurality of controller 68 are implemented, each of the controllers 68 may communicate with each other.

The predetermined temperature, the predetermined elongation, and the predetermined vacuum level referred to herein may be any suitable value based on one or more of engineering parameters, government parameters, design parameters, manufacturing parameters, specification parameters, etc.

It is to be appreciated that the order or sequence of performing the method as described above is for illustrative purposes and other orders or sequences are within the scope of the present teachings. It is to also be appreciated that the method may include other features not specifically discussed immediately above.

While the best modes and other configurations for carrying out the disclosure have been described in detail, those familiar with the art to which this disclosure relates will recognize various alternative designs and configurations for practicing the disclosure within the scope of the appended claims. Furthermore, the configurations shown in the drawings or the characteristics of various configurations mentioned in the present description are not necessarily to be understood as configurations independent of each other. Rather, it is possible that each of the characteristics described in one of the examples of a configuration can be combined with one or a plurality of other desired characteristics from other configurations, resulting in other configurations not described in words or by reference to the drawings. Accordingly, such other configurations fall within the framework of the scope of the appended claims.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The following Clauses provide some example configurations of the method as disclosed herein.

Clause 1: A method of forming a composite preform, the method comprising: transforming a composite blank material into the composite preform via a two-stage process, which comprises: connecting together a first mold body and a second mold body for a first stage, wherein the first mold body and the second mold body cooperate to transform a composite blank material into the composite preform having a first radius; disposing the composite blank material between a first membrane and a second membrane during the first stage, wherein the first membrane and the second membrane are disposed across the first mold body and the second mold body in the first stage; activating a vacuum to expel a gaseous fluid out of a space between the first membrane and the first mold body and the second mold body to cause the composite blank material to form a first radius during the first stage; removing the second membrane at the end of the first stage; disconnecting the first mold body and the second mold body from each other for a second stage, wherein the first mold body transform the composite blank material into the composite preform having a second radius; disposing a third membrane at least partially over the composite blank material during the second stage; and activating the vacuum to expel a gaseous fluid out of an area between the third membrane and the first mold body to cause the composite blank material to form the second radius during the second stage, wherein the second stage occurs after the first stage.

Clause 2: The method as set forth in clause 1 further comprising: activating a first zone of a heater to heat the composite blank material to set a profile of the first radius during the first stage; and activating a second zone of the heater to heat the composite blank material to set a profile of the second radius during the second stage, wherein the first zone and the second zone are different from each other.

Clause 3: The method as set forth in clause 2 wherein the heater is incorporated into the first mold body, and further comprising activating the first zone of the heater and activating the second zone of the heater during the second stage.

Clause 4: The method as set forth in any one of the preceding clauses wherein the first mold body includes a first sealing surface and the second mold body includes a second sealing surface, and the first mold body includes a first contour profile, wherein the first contour profile is disposed between the first sealing surface and the second sealing surface, and further comprising: disposing the first membrane across the first sealing surface and the second sealing surface such that the first membrane overlaps the first contour profile; disposing the composite blank material on the first membrane; and disposing the second membrane over the composite blank material and abut the first membrane beyond the composite blank material to contain the composite blank material therebetween.

Clause 5: The method as set forth in clause 4 wherein activating the vacuum to expel the gaseous fluid out of the space between the first membrane and the first mold body and the second mold body further comprises continuing to expel the gaseous fluid out of the space until a predetermined elongation of the second membrane is reached, at which time expelling the gaseous fluid is stopped via the vacuum, and the vacuum holds a predetermined vacuum level to the first membrane and the second membrane to form the first radius over the first contour profile.

Clause 6: The method as set forth in clause 5 further comprising heating, via a heater, at least part of the composite blank material around the first radius to a predetermined temperature while the predetermined vacuum level is held on the first membrane and the second membrane to set a profile of the first radius during the first stage to partially form the composite preform.

Clause 7: The method as set forth in clause 6 further comprising: cooling the first radius after heating the first radius to the predetermined temperature to partially form the composite preform; releasing the predetermined vacuum level after cooling the first radius; and removing the second membrane after releasing the predetermined vacuum level at the end of the first stage.

Clause 8: The method as set forth in any one of the preceding clauses: wherein disconnecting the first mold body and the second mold body from each other occurs while maintaining the partially formed composite preform on the first mold body; and further comprising attaching a secondary sealing surface to the first mold body, wherein the secondary sealing surface presents a flat configuration.

Clause 9: The method as set forth in clause 8 wherein the first mold body includes a third sealing surface, wherein the first mold body includes a second contour profile spaced from the first contour profile, and further comprising: disposing the third membrane across the secondary sealing surface and the third sealing surface of the first mold body and partially over the composite blank material such that the third membrane overlaps the second contour profile to contain the composite blank material.

Clause 10: The method as set forth in clause 9 wherein activating the vacuum to expel the gaseous fluid out of the area between the third membrane and the first mold body further comprises continuing to expel the gaseous fluid out of the area until a predetermined elongation of the third membrane is reached, at which time expelling the gaseous fluid is stopped via the vacuum, and the vacuum holds a predetermined vacuum level to the third membrane to form the second radius over the second contour profile.

Clause 11: The method as set forth in clause 10 further comprising heating, via the heater, at least part of the composite blank material around the second radius to a predetermined temperature while the predetermined vacuum level is held on the third membrane to set a profile of the second radius during the second stage.

Clause 12: The method as set forth in any one of the preceding clauses wherein disposing the composite blank material between the first membrane and the second membrane further comprises: disposing the composite blank material on the first membrane; and disposing the second membrane over the composite blank material and abut the first membrane beyond the composite blank material to contain the composite blank material therebetween.

Clause 13: The method as set forth in clause 12 wherein activating the vacuum to expel the gaseous fluid out of the space between the first membrane and the first mold body and the second mold body further comprises continuing to expel the gaseous fluid out of the space until a predetermined elongation of the second membrane is reached, at which time expelling the gaseous fluid is stopped via the vacuum, and the vacuum holds a predetermined vacuum level to the first membrane and the second membrane to form the first radius.

Clause 14: The method as set forth in clause 13 further comprising heating, via a heater, at least part of the composite blank material around the first radius to a predetermined temperature while the predetermined vacuum level is held to set a profile of the first radius during the first stage.

Clause 15: The method as set forth in clause 14 further comprising: cooling the first radius after heating the first radius to the predetermined temperature to partially form the composite preform; releasing the predetermined vacuum level after cooling the first radius; removing the second membrane after releasing the predetermined vacuum level at the end of the first stage; and trimming the first membrane after removing the second membrane.

Clause 16: The method as set forth in clause 15: wherein disconnecting the first mold body and the second mold body from each other occurs while maintaining the partially formed composite preform on the first mold body; and further comprising attaching a secondary sealing surface to the first mold body, wherein the secondary sealing surface presents a flat configuration.

Clause 17: The method as set forth in clause 16 further comprising disposing the third membrane across the secondary sealing surface of the first mold body and partially over the composite blank material and partially over the trimmed first membrane to contain the composite blank material.

Clause 18: The method as set forth in clause 17: wherein activating the vacuum to expel the gaseous fluid out of the area between the third membrane and the first mold body further comprises continuing expel the gaseous fluid out of the area until a predetermined elongation of the third membrane is reached, at which time expelling the gaseous fluid is stopped via the vacuum, and the vacuum holds a predetermined vacuum level to the third membrane to form the second radius; and further comprising heating, via the heater, at least part of the composite blank material around the first radius and the second radius to a predetermined temperature while the predetermined vacuum level is held on the third membrane to set the composite preform.

Clause 19: The method as set forth in clause 18 further comprising: cooling the first radius and the second radius after heating to the predetermined temperature to complete the forming of the composite preform; releasing the predetermined vacuum level after cooling the first radius and the second radius; and remove the completed composite preform from the first mold body.

Clause 20: The method as set forth in any one of the preceding clauses: wherein the first mold body and the second mold body are implemented during the first stage; and further comprising removing the second mold body from the first mold body for the second stage such that the first mold body is implemented during the second stage without the second mold body.

Clause 21: The method as set forth in clause 20 further comprising: cutting slits into the third membrane to define a foldable portion of the third membrane; folding the foldable portion over a secondary forming body of the first mold body; and attaching the foldable portion to the secondary forming body such that the foldable portion is sealed to the secondary forming body.

Clause 22: The method as set forth in any one of the preceding clauses further comprising activating a vacuum to expel a gaseous fluid out of another area between the first membrane and the second membrane.

## Claims

1. A method of forming a composite preform (10), the method comprising:
transforming a composite blank material (16) into the composite preform (10) via a two-stage process, which comprises:
connecting together a first mold body (12) and a second mold body (14) for a first stage, wherein the first mold body (12) and the second mold body (14) cooperate to transform a composite blank material (16) into the composite preform (10) having a first radius (22);
disposing the composite blank material (16) between a first membrane (26) and a second membrane (28) during the first stage, wherein the first membrane (26) and the second membrane (28) are disposed across the first mold body (12) and the second mold body (14) in the first stage;
activating a vacuum (34) to expel a gaseous fluid out of a space (36) between the first membrane (26) and the first mold body (12) and the second mold body (14) to cause the composite blank material (16) to form a first radius (22) during the first stage;
removing the second membrane (28) at the end of the first stage;
disconnecting the first mold body (12) and the second mold body (14) from each other for a second stage, wherein the first mold body (12) transform the composite blank material (16) into the composite preform (10) having a second radius (24);
disposing a third membrane (50) at least partially over the composite blank material (16) during the second stage; and
activating the vacuum (34) to expel a gaseous fluid out of an area (66) between the third membrane (50) and the first mold body (12) to cause the composite blank material (16) to form the second radius (24) during the second stage, wherein the second stage occurs after the first stage.

2. The method according to claim 1, further comprising:
activating a first zone (46) of a heater (44) to heat the composite blank material (16) to set a profile of the first radius (22) during the first stage; and
activating a second zone (48) of the heater (44) to heat the composite blank material (16) to set a profile of the second radius (24) during the second stage, wherein the first zone (46) and the second zone (48) are different from each other.

3. The method according to claim 2, wherein the heater (44) is incorporated into the first mold body (12), and further comprising activating the first zone (46) of the heater (44) and activating the second zone (48) of the heater (44) during the second stage.

4. The method according to any one of claims 1-3, wherein the first mold body (12) includes a first sealing surface (30) and the second mold body (14) includes a second sealing surface (32), and the first mold body (12) includes a first contour profile (18), wherein the first contour profile (18) is disposed between the first sealing surface (30) and the second sealing surface (32), and the method further comprising:
disposing the first membrane (26) across the first sealing surface (30) and the second sealing surface (32) such that the first membrane (26) overlaps the first contour profile (18);
disposing the composite blank material (16) on the first membrane (26); and
disposing the second membrane (28) over the composite blank material (16) and abut the first membrane (26) beyond the composite blank material (16) to contain the composite blank material (16) therebetween.

5. The method according to claim 4, wherein activating the vacuum (34) to expel the gaseous fluid out of the space (36) between the first membrane (26) and the first mold body (12) and the second mold body (14) further comprises:
continuing to expel the gaseous fluid out of the space (36) until a predetermined elongation of the second membrane (28) is reached, at which time expelling the gaseous fluid is stopped via the vacuum (34), and the vacuum (34) holds a predetermined vacuum level to the first membrane (26) and the second membrane (28) to form the first radius (22) over the first contour profile (18).

6. The method according to claim 5, further comprising heating, via a heater (44), at least part of the composite blank material (16) around the first radius (22) to a predetermined temperature while the predetermined vacuum level is held on the first membrane (26) and the second membrane (28) to set a profile of the first radius (22) during the first stage to partially form the composite preform (10).

7. The method according to claim 6, further comprising:
cooling the first radius (22) after heating the first radius (22) to the predetermined temperature to partially form the composite preform (10);
releasing the predetermined vacuum level after cooling the first radius (22); and
removing the second membrane (28) after releasing the predetermined vacuum level at the end of the first stage.

8. The method according to any one of claims 1-7, wherein:
disconnecting the first mold body (12) and the second mold body (14) from each other occurs while maintaining the partially formed composite preform (10) on the first mold body (12); and
further comprising attaching a secondary sealing surface (54) to the first mold body (12), wherein the secondary sealing surface (54) presents a flat configuration.

9. The method according to claim 8, wherein the first mold body (12) includes a third sealing surface (56), wherein the first mold body (12) includes a second contour profile (20) spaced from the first contour profile (18), and the method further comprising:
disposing the third membrane (50) across the secondary sealing surface (54) and the third sealing surface (56) of the first mold body (12) and partially over the composite blank material (16) such that the third membrane (50) overlaps the second contour profile (20) to contain the composite blank material (16).

10. The method according to claim 9, wherein activating the vacuum (34) to expel the gaseous fluid out of the area (66) between the third membrane (50) and the first mold body (12) further comprises:
continuing to expel the gaseous fluid out of the area (66) until a predetermined elongation of the third membrane (50) is reached, at which time expelling the gaseous fluid is stopped via the vacuum (34), and the vacuum (34) holds a predetermined vacuum level to the third membrane (50) to form the second radius (24) over the second contour profile (20).

11. The method according to claim 10, further comprising heating, via the heater (44), at least part of the composite blank material (16) around the second radius (24) to a predetermined temperature while the predetermined vacuum level is held on the third membrane (50) to set a profile of the second radius (24) during the second stage.

12. The method according to any one of claims 1-11, wherein disposing the composite blank material (16) between the first membrane (26) and the second membrane (28) further comprises:
disposing the composite blank material (16) on the first membrane (26); and
disposing the second membrane (28) over the composite blank material (16) and abut the first membrane (26) beyond the composite blank material (16) to contain the composite blank material (16) therebetween.

13. The method according to claim 7, further comprising:
trimming the first membrane (26) after removing the second membrane (28).

14. The method according to claim 13, further comprising:
disposing the third membrane (50) across the secondary sealing surface (54) of the first mold body (12) and partially over the composite blank material (16) and partially over the trimmed first membrane (26) to contain the composite blank material (16).

15. The method according to claim 11, further comprising:
cooling the first radius (22) and the second radius (24) after heating to the predetermined temperature to complete the forming of the composite preform (10);
releasing the predetermined vacuum level after cooling the first radius (22) and the second radius (24); and
remove the completed composite preform (10) from the first mold body (12).
